# EUROPÄISCHE PATENTSCHRIFT

(11) **EP 1 115 317 B1**
(45) Veröffentlichungstag und Bekanntmachung des Hinweises auf die Patenterteilung: **02.07.2003**
(21) Anmeldenummer: 99969317.9
(22) Anmeldetag: 22.09.1999
(51) Int. Cl.: A47J 31/44

(54) **VORRICHTUNG ZUR ERZEUGUNG VON MILCHSCHAUM FÜR CAPPUCCINO**
DEVICE FOR PRODUCING MILK FROTH FOR CAPPUCCINO
DISPOSITIF DE PRODUCTION D'ECUME DE LAIT POUR CAPUCCINO

(30) Priorität: 24.09.1998 DE 29817116 U
(43) Veröffentlichungstag der Anmeldung: 18.07.2001
(73) Patentinhaber: JURA ELEKTROAPPARATE AG, CH-4626 Niederbuchsiten (CH)
(72) Erfinder: PROBST, Emanuel, CH-8049 Zürich (CH)
(74) Vertreter: Schubert, Siegmar, Dipl.-Ing.
(86) Internationale Anmeldenummer: EP9907047
(87) Internationale Veröffentlichungsnummer: WO00016674

(56) Entgegenhaltungen:
- EP-A- 0 344 859
- EP-A- 0 801 922
- EP-A- 0 858 757
- DE-A- 19 705 633
- DE-U- 8 907 183
- US-A- 5 265 519

## Beschreibung

Die Erfindung betrifft eine Vorrichtung zur Erzeugung von Milchschaum für Cappuccino nach dem Oberbegriff des Anspruchs 1.

Bei einer derartigen bekannten Vorrichtung zur Erzeugung einer cremigen Dampf-Milch-Luftemulsion zur Zubereitung von Cappuccino mündet in eine Unterdruckkammer, die stromabwärts eines Dampfrohres mit einer Düse angeordnet ist, eine Milchzuleitung, welche stromaufwärts der Unterdruckkammer eine Luftöffnung aufweist, die mit der umgebenden Atmosphäre in Verbindung steht (US-PS 5 265 519). Das dadurch in der Unterdruckkammer entstehende Dampf-Milch-Luftgemisch strömt aus der Unterdruckkammer in eine Emulgierkammer, deren geschlossener Boden eine im wesentlichen konische Erhebung aufweist. Der aus der Unterdruckkammer gegen die zentrale Erhebung auf dem Boden der Emulgierkammer strömende Gemischstrom wird durch die Erhebung aufgeteilt und einen neuen großflächigen Gemischstrom umgeformt, der auf dem Boden der Seitenwand der Emulgierkammer trifft und sich innig mit einem Teil des bereits in der Emulgierkammer befindlichen Gemischs zu einer guten Emulsion vermischen soll. Damit soll ein cremiges Gemisch feinen Schaums erzeugt werden, welches durch eine seitliche Öffnung der Emulgierkammer austritt und von dort in eine weitere zylindrische Kammer, die zu der Emulgierkammer seitlich versetzt ist, strömen kann. Dort tritt eine Beruhigung der Emulsion ein, während überschüssiger Dampf durch eine obere Öffnung der zusätzlichen Kammer austreten kann. - Die mit dieser Vorrichtung angestrebten Ziele werden jedoch noch nicht vollständig erreicht.

Zur besseren Vormischung der in die Unterdruckkammer angesaugten Milch mit Luft ist es bereits bekannt, zwischen der Unterdruckkammer und der Milchzuleitung eine Vormischkammer anzuordnen, in die der Luftkanal mündet (EP 0 858 757 A1). Hiermit wird zwar in der Unterdruckkammer ein weitgehend homogenes Dampf-Milch-Luftgemisch gebildet, jedoch kann dieses Gemisch noch zu großporig sein.

Zum weiteren Stand der Technik gehört eine Vorrichtung zum Aufschäumen und Heizen von Flüssigkeiten wie Milch oder dergleichen, die mit Längskanälen zum Ansaugen von schaumbildender Luft um eine Beruhigungskammer verhältnismäßig großen Querschnitts und großer Länge ausgestattet ist (EP 0 813 834 A1). In einer Unterdruckkammer dieser Vorrichtung wird zunächst nur die angesaugte Milch mit Dampf zum Vorschäumen versetzt. Dieses Gemisch wird in eine sich an die Unterdruckkammer stromabwärts anschließenden Beschleunigungsstrecke, in der sich Öffnungen befinden, die mit den luftführenden Längskanälen in Verbindung stehen, geleitet, wobei der gewünschte Schaum entsteht. Die Milch und der Schaum werden in der zylindrischen Kammer verhältnismäßig großen Durchmessers und großer Länge beruhigt und homogen verteilt. - Hiermit wird aber nicht ohne weiteres die in vielen Fällen gewünschte Feinporigkeit erreicht.

Bei einer ähnlichen Vorrichtung schließt sich an die Unterdruckkammer der ersten Düsenanordnung eine zweite Düsenanordnung an, die Lufteintrittsöffnungen aufweist, welche direkter als über die Längskanäle der voranstehenden Anordnung mit der umgebenden Atmosphäre in Verbindung (EP 0344 859 B1) stehen. In der zweiten Düsenanordnung wird Luft angesaugt und mit der Milch zur Schaumbildung versetzt, die mit der ersten Düsenanordnung angesaugt wird. Der Schaum strömt aus einer sich an die zweite Düsenanordnung anschließenden Kammer verhältnismäßig großen Durchmesser und großer Länge durch untere insbesondere seitliche Öffnungen in dieser letztgenannten Kammer und ist demzufolge beruhigt und gleichförmig verteilt. Der Boden dieser Kammer ist so geformt, daß er einen direkten Austritt des Schaums bei hoher Geschwindigkeit verhindert. Er weist hierzu eine abgerundete Erhebung auf. Der Boden ist nahe dem Rand mit einzelnen Tropf löchern durchbrochen. Auch mit dieser Vorrichtung wird nicht das gewünschte feinporig homogen emulgierte Dampf-Milch-Luftgemisch erzielt.

Der vorliegenden Erfindung die Aufgabe zugrunde, eine Vorrichtung zur Erzeugung von Milchschaum für Cappuccino zu schaffen, mit welcher der Milchschaum feinporig homogen emulgiert wird.

Diese Aufgabe wird für eine Vorrichtung der eingangs genannten Gattung durch die in dem kennzeichnenden Teil des Anspruchs 1 angegebenen Merkmale gelöst. Lösungsvarianten sind in den Ansprüchen 4 und 7 angegeben. Die Lösung und Lösungsvarianten beruhen auf dem gemeinsamen Prinzip, daß das in der Unterdruckkammer nach Vormischung der Milch mit Luft gebildete Dampf-Milch-Luftgemisch in der Emulgierkammer nochmals intensiv vermischt und verwirbelt wird, während das Gemisch möglichst lange in der Emulgierkammer verweilt, wobei das Gemisch durch die ständig nachströmende Dampfenergie feinporig emulgiert wird.

Im einzelnen wird nach Anspruch 1 durch die in der Emulgierkammer stromabwärts gestuft vergrößerten Querschnitte der Emulgierkammer das Dampf-Milch-Luftgemisch stark verwirbelt. Die Verweildauer des Dampf-Milch-Luftgemischs in der Emulgierkammer wird durch die zentrale strömungsumleitende Erhebung um die Austrittsöffnung in dem Boden der Emulgierkammer, die als Strömungsfalle geformt ist, verlängert, indem die Strömungsfalle das im wesentlichen in Hauptströmungsrichtung auf sie auftreffende Dampf-Milch-Luftgemisch im wesentlichen entgegen der Hauptströmungsrichtung umlenkt. Die Hauptströmungsrichtung ist durch die Düsenanordnung der Unterdruckkammer definiert, die stromabwärts in die Emulgierkammer übergeht. Erst an diese speziell ausgebildete Emulgierkammer schließt sich die Beruhigungsstrecke über eine Austrittsöffnung in dem Boden der Emulgierkammer an. Die Beruhigungsstrecke mit der Austrittsöffnung kann einfach als durchgehende Bohrung ausgebildet sein.

Ein zusätzlicher Vorteil dieser Vorrichtung ist deren kompakte Ausbildung.

Für die erfindungsgemäße Ausbildung der Emulgierkammer nach Anspruch 1 genügen bereits zwei in Hauptströmungsrichtung aufeinanderfolgende Abschnitte, von denen der erste Abschnitt gegenüber einer Austrittsöffnung der Unterdruckkammer abgestuft erweitert ist und von denen der zweite Abschnitt einen gegenüber dem ersten Abschnitt abgestuft erweiterten Querschnitt aufweist, in Verbindung mit der Strömungsfalle in dem Boden, d.h. dem stromabwärts gelegenen Ende der Emulgierkammer.

Noch signifikant besser wird die angestrebte feinporige Emulgierung gemäß Anspruch 2 erreicht, wonach die Emulgierkammer drei Abschnitte aufweist, deren Querschnitte gegenüber dem Querschnitt der Austrittsöffnung der Unterdruckkammer bzw. des stromaufwärts benachbarten Abschnitts abgestuft erweitert sind. Auch hier ist die Strömungsfalle am Boden der Emulgierkammer vorgesehen.

Die Strömungsfalle ist gemäß Anspruch 3 im einzelnen als Sackring mit einer ringförmigen entgegen der Hauptströmungsrichtung des Dampf-Milch-Luftgemischs offenen Wanne ausgebildet. Die Wanne ist dabei so geformt und orientiert, daß sie das im wesentlichen in Hauptströmungsrichtung auftreffende Dampf-Milch-Luftgemisch im wesentlichen entgegen der Hauptströmungsrichtung umlenkt. Dadurch wird das Gemisch nochmals verwirbelt und länger in der Emulgierkammer gehalten.

In einer Weiterbildung der Erfindung ist gemäß Anspruch 4 in der Emulgierkammer im Abstand zu deren Boden eine Strömungsumlenkeinheit angeordnet, die derart geformt ist, daß eine Strömungsumlenkung im wesentlichen entgegen der Hauptströmungsrichtung des Dampf-Milch-Luftgemischs eintritt. Durch diese Strömungsumlenkung wird wiederum eine gewünschte Verwirbelung des nachströmenden Gemischs verursacht, und zwar unter anderem zusätzlich zu der Verwirbelung durch die erfindungsgemäß stets vorgesehene Strömungsfalle in dem Boden der Emulgierkammer.

Die Strömungsumlenkeinheit kann gemäß Anspruch 5 zweckmäßig mit einer, eine zentrale, im wesentlichen kegelförmige Erhebung umgebenden ringförmigen offenen Wanne ausgebildet sein, die ähnlich, aber flacher geformt sein kann als die ringförmige offene Wanne der Strömungsfalle in dem Boden.

Gemäß Anspruch 6 wird die Strömungsumlenkeinheit zweckmäßig durch radiale Stege in der Emulgierkammer im Abstand zu deren Innenwand gehalten, so daß sich die Strömung in Hauptströmungsrichtung im Bereich der Innenwand ausbilden kann.

In einer Variante der erfindungsgemäßen Vorrichtung gemäß Anspruch 7 weist die Emulgierkammer an den Stufen zwischen deren Abschnitten Blenden auf, welche den benachbarten jeweils kleineren Querschnitt zusätzlich verengen. Diese Blenden bzw. Verengungen bilden ausgeprägte Störkanten, die eine noch stärkere Verwirbelung des Dampf-Milch-Luftgemischs hervorrufen als die Abstufungen der Querschnitte selbst.

Insbesondere zur besseren Reinigung, aber auch, um die Emulgierkammer und die benachbarten Bereiche unkompliziert herzustellen, umfaßt die Emulgierkammer gemäß Anspruch 8 einzelne, außen im wesentlichen zylindrische Elemente, die innen mit wenigstens einem der abgestuften Querschnitte ausgeformt sind und durch eine gemeinsame Hülse zusammengehalten sind. Sämtliche Elemente sind dabei in der außen glattflächigen Hülse konzentrisch angeordnet.

Gemäß Anspruch 8 können die Elemente der Emulgierkammer weiter fertigungsgünstig aus halbhartem Kunststoffmaterial, insbesondere Chloropren-Kautschuk (Marke "Neopren"), bestehen. Dieses Kunststoffmaterial weist auch eine genügende Formbeständigkeit unter Dampfeinfluß auf.

Als Kombinationsmerkmal der erfindungsgemäßen Vorrichtung ist gemäß Anspruch 10 bevorzugt zwischen der Unterdruckkammer und der Milchzuleitung eine Vormischkammer angeordnet, in die der Luftkanal mündet. Dadurch wird die homogene Luftverteilung der Emulsion gefördert, indem bereits ein gut vorgemischtes Milch-Luftgemisch in die Unterdruckkammer eintritt, bevor dort die weitere Gemischbildung mit Dampf erfolgt und anschließend die zusätzliche Verwirbelung in der Emulgierkammer eintritt.

Drei Varianten der Erfindung werden im folgenden anhand von Ausführungsbeispielen unter Bezugnahme auf die Zeichnung mit vier Figuren erläutert. Es stellen dar:
- Fig. 1: einen Längsschnitt durch die erste Variante der Vorrichtung,
- Fig. 2: einen Längsschnitt durch die zweite Variante der Vorrichtung,
- Fig. 3: einen Querschnitt in der Ebene A-B in Fig. 2 der zweiten Variante der Vorrichtung und
- Fig. 4: einen Längsschnitt durch eine dritte Variante der Vorrichtung.

In sämtlichen Figuren sind übereinstimmende Teile mit gleichen Bezugszeichen versehen.

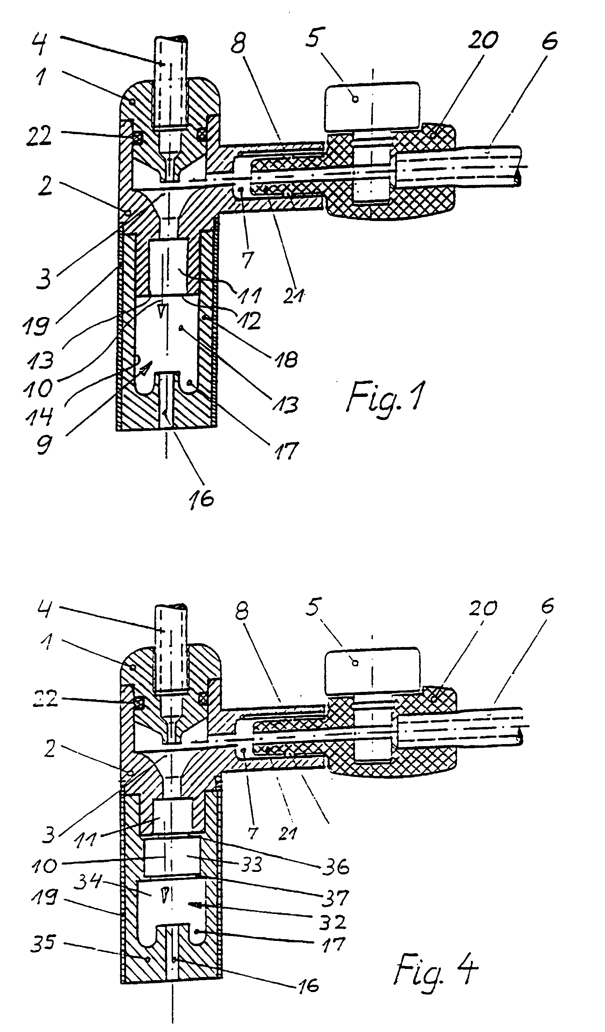

Die Längsschnitte liegen sämtlich in einer in Gebrauchslage senkrechten Ebene. Alle Varianten gemäß den Fig. 1-4 umfassen eine Düsenanordnung 1,2 mit einer Unterdruckkammer 3. Die Düsenanordnung 1,2 ist mit einer Dampfzuleitung 4 verbunden, die von einem Dampfgenerator einer Espressomaschine gespeist wird. Die Unterdruckkammer 3 steht über einen Flußmengenbegrenzer 5 mit einer Milchzuleitung 6 in Verbindung, die von einem externen Milchgefäß ausgeht. Zwischen der Unterdruckkammer und dem Flußmengenbegrenzer 5 ist im Strömungsweg der Milch eine Vormischkammer 7 an einer Stirnseite eines zylindrischen Ansatzes 21 des Flußmengenbegrenzers gebildet, in welche ein Luftkanal 8 mündet.

Die Unterdruckkammer 3 geht an ihrem stromabwärts liegenden Ende in eine nicht bezeichnete Bohrung über, die zu einer Emulgierkammer 9 führt. Die Hauptströmungsrichtung ist mit einem Pfeil 10 bezeichnet. Das Querschnitt-Längenverhältnis der nicht bezeichneten Bohrung liegt wesentlich näher an 1 als 1:10, wie aus der Zeichnung ersichtlich.

Die Bohrung reicht in einen ersten Abschnitt 11 verhältnismäßig kleinen lichten Querschnitts bzw. Durchmessers der Emulgierkammer. Diese ist insgesamt coaxial zu der Düsenanordnung 1,2 angeordnet. Stromabwärts geht der erste Abschnitt 9 bei einer Stufe 12 in einen zweiten konzentrischen Abschnitt 13 der Emulgierkammer über, die stromabwärts der Stufe 12 eine größere Querschnittsfläche bzw. einen größeren Durchmesser aufweist. Die Längen des ersten Abschnitts 11 und des zweiten Abschnitts 13 in Hauptströmungsrichtung 10 können dabei größer als die Durchmesser dieser Abschnitte sein, jedoch ist das Verhältnis der Länge der Abschnitte zu deren Durchmesser erheblich kleiner als bei einer Beruhigungsstrecke, wo 10:1 typisch ist. Die Innenwände 14,15 des ersten Abschnitts 11 und des zweiten Abschnitts 13 sind ohne Lufteintrittsöffnungen ausgebildet.

Konzentrisch in einem nicht bezeichneten Boden des zweiten Abschnitts 13 der Emulgierkammer 9 sitzt eine Bohrung, die als Beruhigungsstrecke 16 wirkt. Die Bohrung der Beruhigungsstrecke 16 ist von einem Sackring 17 als Strömungsfalle umgeben, die, wie im einzelnen aus Fig. 1 ersichtlich, als ringförmige, entgegen der Hauptströmungsrichtung 11 oben offene Wanne ausgebildet ist.

Der erste Abschnitt 11 der Emulgierkammer 9 ist in dem Element 2 der Düsenanordnung ausgeformt, während ein zusätzliches annähernd als Hohlzylinder mit Boden geformtes Element 18 den zweiten Abschnitt 13 der Emulgierkammer 9, die Beruhigungsstrecke 16 in dem Boden und den die Beruhigungsstrecke umgebenden Sackring 17 enthält. Das Element 2 und das zusätzliche Element 18 werden durch eine Hülse 19 für Reinigungsszwecke voneinander lösbar zusammengehalten. Zur Abdichtung zwischen den ineinandersteckbaren Elementen 1 und 2 der Düsenanordnung dient ein 0-Ring 22.

Mit einem Bezugszeichen 20 ist ein Griff bezeichnet, an dem der Flußmengenbegrenzer 5 erfaßt werden kann, um ihn in eine Aufnahme der Düsenanordnung zu stecken oder aus dieser herauszuziehen.

Wenn die Milchzuleitung 6 mit einem Milchgefäß verbunden ist und über die Dampfzuleitung 4 Dampf in die Düsenanordnung 1,2 einströmt, werden durch den in der Unterdruckkammer 3 gebildeten Unterdruck Milch und Luft in die Vormischkammer 21 gesaugt, wo eine Luft-Milchvormischung erfolgt. Dieses Luft-Milchgemisch strömt in die Unterdruckkammer 3, in welcher Dampf zugemischt wird. Das dadurch entstehende Dampf-Luft-Milchgemisch strömt über die nicht bezeichnete Austrittsöffnung bzw. Bohrung stromabwärts der Unterdruckkammer in den ersten Abschnitt 11 der Emulgierkammer 9, wobei zwischen der Bohrung und dem ersten Abschnitt mit gegenüber der Bohrung größerer Querschnittsfläche bereits eine Stufe gebildet ist, an der eine zusätzlich Verwirbelung des Gemisches eintritt. Wenn das Gemisch in Hauptströmungsrichtung 11 den ersten Abschnitt 11 der Emulgierkammer 9 über die Stufe 12 in den zweiten Abschnitt 13 der Emulgierkammer 9 verläßt, tritt eine erneute zusätzliche Verwirbelung unter dem anhaltenden Einfluß der Dampfenergie ein. Das dergestalt zusätzlich verwirbelte und emulgierte Dampf-Milch-Luftgemisch verweilt infolge der Gestaltung des Bodenbereichs des zweiten Abschnitts der Emulgierkammer wesentlich länger als bei einer Bodengestaltung mit einer oder mehreren einfachen Austrittsöffnungen. Hier ist die Austrittsöffnung, die durch die Bohrung der Beruhigungsstrecke 16 in dem Boden gebildet wird, durch den Sackring 17 umgeben, der eine Ausflußfalle darstellt, durch die das Gemisch von der Austrittsöffnung weg in das Innere des zweiten Abschnitts der Emulgierkammer geleitet wird, wo eine erneute Verwirbelung und Durchmischung mit dem in den zweiten Abschnitt einströmenden Dampf-Milch-Luftgemisch erfolgt.

Insgesamt wird das in die Emulgierkammer eintretende, vorgemischte Dampf-Milch-Luftgemisch mehrfach in der Emulgierkammer intensiv vermischt und verwirbelt, bevor es die Emulgierkammer feinporig emulgiert verlassen kann.

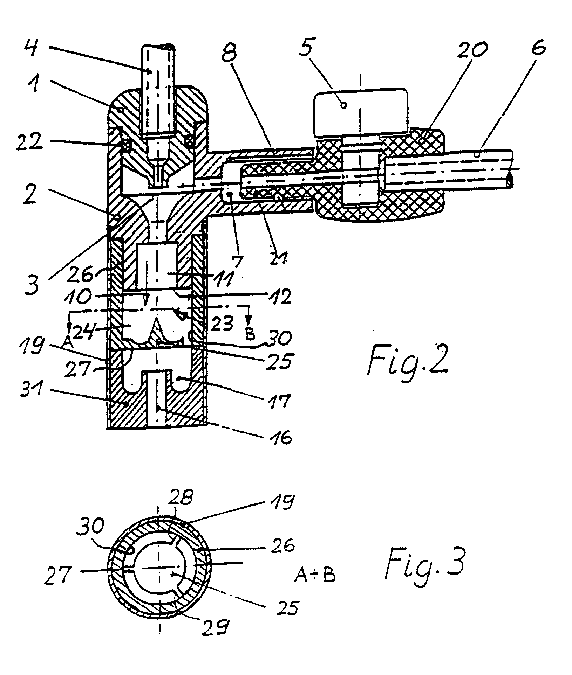

Die Variante der Vorrichtung gemäß den Fig. 2 und 3 unterscheidet sich von der voranstehend besprochenen ersten Variante dadurch, daß in der allgemein mit 23 bezeichneten Emulgierkammer, und zwar in deren zweitem Abschnitt 24, mit gegenüber dem ersten Abschnitt 11 an der Stufe 12 vergrößertem freien Querschnitt eine zusätzliche Strömungsumlenkeinheit 25 angeordnet ist, die Bestandteil eines zusätzlichen Elements 26 ist und sich an dessen stromabwärts gelegenen Ende befindet. Sie umfaßt eine nach oben offene ringförmige Wanne, die eine im wesentlichen kegelförmige Erhebung umgibt, siehe Fig. 2, und das in den zweiten Abschnitt der Emulgierkammer 23 einströmende Dampf-Mich-Luftgemisch ähnlich dem Sackring 10 in dem Boden im wesentlichen nach oben umlenkt, um eine zusätzlich Verwirbelung und Durchmischung herbeizuführen, bevor das Dampf-Milch-Luftgemisch in den Raum unmittelbar über dem Sackring 17 und und dann in die Beruhigungsstrecke 16 strömen kann. Damit diese Strömung gewährleistet ist, sind radiale Stege 17-29 zwischen der Strömungsumlenkeinheit 25 und einer Innenwand 30 des Elements 26 ausgeformt, wie aus Fig. 3 in Verbindung mit Fig. 2 ersichtlich.

Der zweite Abschnitt 24 der Emulgierkammer 23 wird hier nicht nur durch das zusätzliche Element 26 gebildet, sondern durch ein weiteres zusätzliches Element 31, welches die Beruhigungsstrecke 16 und den Sackring 15 beinhaltet. Die Elemente 2,26 und 31 werden wiederum durch die Hülse 19 konzentrisch zusammengehalten.

Die in Fig. 4 dargestellte dritte Variante der Vorrichtung entspricht, in Strömungsrichtung 10 gesehen, bis einschließlich dem ersten Abschnitt 11 der hier insgesamt mit 32 bezeichneten Emulgierkammer der ersten und der zweiten Variante.

In der dritten Variante schließen sich an den ersten Abschnitt 11 der Emulgierkammer 32 ein zweiter Abschnitt 33 und ein dritter Abschnitt 34 an, wobei der zweite Abschnitt 33 und der dritte Abschnitt 34 aus einem einstückigen zusätzlichen Element 35 ausgeformt sind. Der erste Abschnitt 11, der zweite Abschnitt 33 und der dritte Abschnitt 34 der Emulgierkammer 32 folgen in Hauptströmungsrichtung 10 jeweils mit sprunghaft vergrößerter freier Querschnittsfläche aufeinander. Anstelle der dadurch zwischen den Abschnitten gebildeten Stufen sind hier runde Blenden 36,37 ausgeformt, die noch kleinere Querschnitte als die benachbarten Abschnitte aufweisen und die damit in den Strömungsweg des Dampf-Milch-Luftgemischs hineinragende Störkanten bilden, die im Vergleich zu den Stufen der ersten Variante und der zweiten Variante ein erhöhte Verwirbelung erzeugen. Die Verwirbelung wied also infolge der drei kaskadenförmigen Abschnitte mit jeweils in Hauptströmungsrichtung abgestuft vergrößertem Durchmesser insgesamt verstärkt. Die drei Abschnitte sind dabei in Strömungsrichtung so kurz, daß die Wirbelbildung durch die ständig nachströmende Dampfernergie aktiviert ist und kein Beruhigungseffekt eintritt. Erst das feinporig emulgierte Dampf-Milch-Luftgemisch, welches durch die Beruhigungsstrecke 16 am Boden des Elements 35 strömt, nachdem es die durch den Sackring 17 gebildete Strömungsfalle überwunden hat, wird beruhigt.

### Bezugszeichenliste:

- 1: Düsenanordnung (Element)
- 2: Düsenanordnung (Element)
- 3: Unterdruckkammer
- 4: Dampfzuleitung
- 5: Flußmengenbegrenzer
- 6: Milchzuleitung
- 7: Vormischkammer
- 8: Luftkanal
- 9: Emulgierkammer
- 10: Hauptströmungsrichtung
- 11: 1. Abschnitt der Emulgierkammer
- 12: Stufe
- 13: 2. Abschnitt der Emulgierkammer
- 14: Innenwand
- 15: Innenwand
- 16: Beruhigungsstrecke
- 17: Sackring
- 18: zusätzliches Element
- 19: Hülse
- 20: Griff
- 21: zylindrischer Ansatz des Flußmengenbegrenzers
- 22: O-Ring
- 23: Emulgierkammer
- 24: 2. Abschnitt
- 15: Strömungsumlenkeinheit
- 16: zusätzliches Element
- 17: radialer Steg
- 18: "
- 19: "
- 30: Innenwand
- 31: weiter zusätzliches Element
- 32: Emulgierkammer
- 33: 2. Abschnitt
- 34: 3. Abschnitt
- 35: zusätzliches Element
- 36: Blende
- 37: Blende

## Patentansprüche

1. Vorrichtung zur Erzeugung von Milchschaum für Cappuccino mit einer stromabwärts eines Dampfrohrs (4) angeordneten Düsenanordnung (1,2) mit einer Unterdruckkammer (3), in die eine Milchzuleitung (6) mündet, wobei ein Luftkanal (8) mit der Milchzuleitung (6) stromaufwärts der Unterdruckkammer (3) in Verbindung steht und wobei stromabwärts der Unterdruckkammer (3) eine Emulgierkammer (9) angeordnet ist, die eine Kammerwand, einen Boden mit einer zentralen strömungsumleitenden Erhebung sowie eine Austrittsöffnung aufweist, an die sich eine Beruhigungsstrecke (16) anschließt,
**dadurch gekennzeichnet,**
**daß** die ohne separate Lufteintrittsöffnungen ausgebildete Emulgierkammer (9,23,32) in Hauptströmungsrichtung (10) mindestens zwei abgestuft erweiterte freie Querschnitte aufweist und daß die zentrale strömungsumleitende Erhebung um die Austrittsöffnung in dem Boden als Strömungsfalle ausgebildet ist, dergestalt, daß sie ein im wesentlichen in Hauptströmungsrichtung auftretendes Gemisch im wesentlichen entgegen der Hauptströmungsrichtung umlenkt.

2. Vorrichtung nach Anspruch 1,
**dadurch gekennzeichnet,**
**daß** die Emulgierkammer (32) drei abgestuft erweiterte freie Querschnitte aufweist.

3. Vorrichtung nach Anspruch 1 oder 2,
**dadurch gekennzeichnet,**
**daß** die Strömungsfalle als Sackring (17) ausgebildet ist.

4. Vorrichtung nach einem der Ansprüche 1-3,
**dadurch gekennzeichnet,**
**daß** in der Emulgierkammer (32) im Abstand zu dem Boden eine Strömungsumlenkeinheit (25) angeordnet ist, die derart geformt ist, daß eine Strömungsumlenkung im wesentlichen entgegen der Hauptströmungsrichtung (10) des Gemischs eintritt.

5. Vorrichtung nach Anspruch 4,
**dadurch gekennzeichnet,**
**daß** die Strömungsumlenkeinheit (25) mit einer eine zentrale, im wesentlichen kegelförmigen Erhebung umgebenden ringförmigen offenen Wanne ausgebildet ist.

6. Vorrichtung nach Anspruch 4 oder 5,
**dadurch gekennzeichnet,**
**daß** die Strömungsumlenkeinheit (25) durch radiale Stege (27-29) in der Emulgierkammer (23) im Abstand zu deren Innenwand gehalten wird.

7. Vorrichtung nach einem der vorangehenden Ansprüche,
**dadurch gekennzeichnet,**
**daß** die Emulgierkammer an Stufen zwischen den abgestuft erweiterten freien Querschnitten Blenden (36,37) aufweist, welche den benachbarten jeweils kleineren Querschnitt an einer der Stufen zusätzlich verringern.

8. Vorrichtung nach einem der vorangehenden Ansprüche,
**dadurch gekennzeichnet,**
**daß** die Emulgierkammer einzelne, außen im wesentlichen zylindrische Elemente umfaßt, die innen mit wenigstens einem der abgestuften Querschnitte ausgeformt sind und durch eine gemeinsame Hülse (19) zusammengehalten sind.

9. Vorrichtung nach Anspruch 8,
**dadurch gekennzeichnet,**
**daß dadurch gekennzeichnet, daß** die Elemente (2,18,25) aus halbhartem Kunststoffmaterial, insbesondere Chloropren-Kautschuk (Marke "Neopren") bestehen.

10. Vorrichtung nach einem der vorangehenden Ansprüche,
**dadurch gekennzeichnet,**
**daß** zwischen der Unterdruckkammer (3) und der Milchzuleitung (6) eine Vormischkammer (7) angeordnet ist, in die der Luftkanal (8) mündet.

## Claims

1. Device for producing milk froth for cappuccino, with a nozzle arrangement (1, 2) downstream from a steam pipe (4) and incorporating a low-pressure chamber (3) into which there opens a milk feed pipe (6), an air duct (8) being connected to the milk feed pipe (6) upstream from the low-pressure chamber (3) and an emulsification chamber (9) being connected downstream from the low-pressure chamber (3), the chamber (9) having a chamber wall, a bottom with a central, flow-directing elevation and an outlet opening which leads into a smooth-flow section,
**characterised in that**
the emulsification chamber (9, 23, 32), which is formed without separate air inlet openings, has in the main flow direction (10) at least two free cross-sections widening out in steps and the central, flow-directing elevation around the outlet opening in the bottom is formed as a flow trap, designed so that it deflects a mixture arriving essentially in the main flow direction in a direction essentially opposite to the main flow direction.

2. Device according to Claim 1,
**characterised in that**
the emulsification chamber (32) has three free cross-sections which widen out in steps.

3. Device according to Claims 1 or 2,
**characterised in that**
the flow trap is formed as an annular pocket (17).

4. Device according to any of Claims 1 to 3,
**characterised in that**
in the emulsification chamber (32), a distance away from the bottom, a flow deflector unit (25) is arranged which is shaped so that it deflects the flow essentially in the direction opposite to the main flow direction (10) of the mixture.

5. Device according to Claim 4,
**characterised in that**
the flow deflector unit (25) is formed with an annular open trough surrounding a central, essentially cone-shaped elevation.

6. Device according to Claims 4 or 5,
**characterised in that**
the flow deflector unit (25) is held within the low-pressure chamber (3) and a distance away from its walls by radial webs (27 - 29).

7. Device according to any of the preceding claims,
**characterised in that**
on the steps between the free cross-sections that widen out in steps, out, the low-pressure chamber has screens (36, 37) which in each case additionally constrict the adjacent smaller cross-section at one of the steps.

8. Device according to any of the preceding claims,
**characterised in that**
the emulsification chamber comprises individual elements essentially cylindrical on the outside, which on the inside are shaped to form at least one of the stepped cross-sections and which are held together by a common outer sleeve (19).

9. Device according to Claim 8,
**characterised in that**
the elements (2, 18, 25) consist of a plastic material of moderate hardness, in particular chloroprene rubber (trademark "Neoprene").

10. Device according to any of the preceding claims,
**characterised in that**
between the low-pressure chamber (3) and the milk feed pipe (6) is arranged a premixing chamber (7) into which the air duct (8) opens.

## Revendications

1. Dispositif pour la production d'écume de lait pour Cappuccino, comportant une structure à buses (1, 2) qui est disposée en aval d'un tuyau à vapeur (4) et comporte une chambre à dépression (3), dans laquelle débouche un conduit d'amenée de lait (6), un canal à air (8) étant placé en liaison avec le conduit d'amenée de lait (6) en amont de la chambre à dépression (3), alors qu'en aval de la chambre à dépression (3), est disposée une chambre de mise en émulsion (9), qui comporte une paroi de chambre, un fond doté d'un bossage central de déviation d'écoulement ainsi qu'un orifice de sortie, auquel se raccorde une voie de tranquillisation (16),
**caractérisé**
**en ce que** la chambre de mise en émulsion (9, 23, 32), aménagée sans orifices d'entrée d'air séparés, présente, dans la direction principale d'écoulement (10), au moins deux sections transversales libres, élargies de façon étagée, et en ce que le bossage central de déviation d'écoulement est aménagé autour de l'orifice de sortie, dans le fond, sous forme d'un piège à écoulement, d'une manière telle qu'il détourne un mélange, arrivant sensiblement dans la direction principale d'écoulement, essentiellement dans le sens opposé à la direction principale d'écoulement.

2. Dispositif selon la revendication 1,
**caractérisé**
**en ce que** la chambre de mise en émulsion (32) présente trois sections transversales libres élargies de façon étagée.

3. Dispositif selon la revendication 1 ou 2,
**caractérisé en ce que** le piège à écoulement est réalisé sous la forme d'une poche annulaire (17).

4. Dispositif selon l'une des revendications 1 à 3,
**caractérisé**
**en ce que** dans la chambre de mise en émulsion (32), est disposée, à distance du fond, une unité de détournement d'écoulement (25) qui est dotée d'une forme telle, qu'un détournement de l'écoulement ait lieu essentiellement dans le sens opposé à la direction principale d'écoulement (10) du mélange.

5. Dispositif selon la revendication 4,
**caractérisé**
**en ce que** l'unité de détournement d'écoulement (25) est réalisée avec un auget ouvert de forme annulaire, entourant un bossage central de forme sensiblement conique.

6. Dispositif selon la revendication 4 ou 5,
**caractérisé**
**en ce que** l'unité de détournement d'écoulement (25) est maintenue, dans la chambre de mise en émulsion (23), à distance de la paroi intérieure de cette dernière, par des nervures radiales (27 à 29).

7. Dispositif selon l'une des revendications précédentes,
**caractérisé**
**en ce que** la chambre de mise en émulsion comporte, au niveau des gradins entre les sections transversales libres élargies de façon étagée, des diaphragmes (36, 37) qui assurent une réduction supplémentaire de la section transversale adjacente respectivement plus petite, au niveau de l'un des gradins.

8. Dispositif selon l'une des revendications précédentes,
**caractérisé**
**en ce que** la chambre de mise en émulsion comprend différents éléments sensiblement cylindriques extérieurement, qui sont façonnés intérieurement suivant au moins l'une des sections transversales étagées et sont maintenus assemblés par une douille commune (19).

9. Dispositif selon la revendication 8,
**caractérisé**
**en ce que** les éléments (2, 18, 25) sont réalisés en une matière plastique demi-dure, notamment en caoutchouc au chloroprène (marque "Néoprène").

10. Dispositif selon l'une des revendications précédentes,
**caractérisé**
**en ce qu'**entre la chambre à dépression (3) et le conduit d'amenée de lait (6), est disposée une chambre de prémélange (7), dans laquelle le canal à air (8) débouche.
